# EUROPEAN PATENT SPECIFICATION

(11) **EP 4 387 185 B1**
(45) Date of publication and mention of the grant of the patent: **29.10.2025**
(21) Application number: 22878421.1
(22) Date of filing: 29.09.2022
(51) Int. Cl.: H04L 41/40, H04L 45/00, H04W 88/14, H04L 61/00, H04L 41/0233, H04L 49/00, H04L 61/5007, H04L 61/5061, H04L 101/659, H04L 101/668

(54) **COMMUNICATION SYSTEM, GLOBAL CONTROLLER, AND PROGRAM**
KOMMUNIKATIONSSYSTEM, GLOBALE STEUERUNG UND PROGRAMM
SYSTÈME DE COMMUNICATION, DISPOSITIF DE COMMANDE GLOBAL ET PROGRAMME

(30) Priority: 08.10.2021 JP 2021166295
(43) Date of publication of application: 19.06.2024
(73) Proprietor: Softbank Corp., Tokyo 105-7529 (JP)
(72) Inventor: MATSUSHIMA, Satoru, Tokyo 105-7529 (JP); HORIBA, Katsuhiro, Tokyo 105-7529 (JP)
(74) Representative: Michalski Hüttermann & Partner Patentanwälte mbB
(86) International application number: PCT/JP2022/036433
(87) International publication number: WO 2023/058551

(56) References cited:
- WO-A1-2019/167474
- WO-A2-2020/226979
- US-A1- 2020 076 685
- US-A1- 2021 314 811

## Description

The present invention relates to a communication system, a global controller, and a program.

Japanese Patent Application Publication No. 2019-176384 describes slicing in a mobile network compliant with 5G (5th generation).
US 2021/314811 A1 describes systems, methods, and computer-readable media for the secure creation of application containers for 5G slices. A MEC application in a MEC layer of a 5G network can be associated with a specific network slice of the 5G network. A backhaul routing policy for the MEC application can be defined based on the association of the MEC application with the specific network slice of the 5G network. Further, a SID for the MEC application that associates the MEC application with a segment routing tunnel through a backhaul of the 5G network can be generated. A MEC layer access policy for the MEC application can be defined based on the SID for the MEC application. As follows, access to the MEC application through the 5G network can be controlled based on both the backhaul routing policy for the MEC application and the MEC layer access policy for the application.
US 2020/076685 A1 describes a method which includes receiving, by an orchestrator for a virtualized computing infrastructure, namespace specification data the specifies a namespace, a first virtual network for the namespace, and a second virtual network for the namespace; sending, by the orchestrator to a network controller for the virtualized computing infrastructure, based on the namespace specification data, at least one request to create, for a virtual execution element to be deployed to the namespace and instantiated in a computing device of the virtualized computing infrastructure, respective virtual network interfaces for the first virtual network and the second virtual network; and send, by the network controller to the computing device, interface configuration data to configure a first virtual network interface for the first virtual network and a second virtual network interface for the second virtual network.

The invention is defined by the independent claims. Embodiments of the invention are described in the dependent claims. In accordance with one embodiment of the present invention, a communication system is provided. The communication system includes a MEC (Mobile Edge Computing) site that is arranged in an SRv6 (Segment Routing IPv6) network arranged between a mobile network and Internet and that has a controller and a plurality of edge hosts. The communication system includes a GC (Global Controller) that manages a plurality of the MEC sites of the present invention as disclosed in claim 1. The controller includes an allocation unit that allocates a prefix to each of the plurality of edge hosts from an IPv6 prefix allocated by the GC. The controller includes a reporting unit that reports, to the GC, an allocation result by the allocation unit. Each of the plurality of edge hosts includes a virtual switch unit that advertises, to the SRv6 network, a prefix allocated by the allocation unit, and a BGP (Border Gateway Protocol) speaker unit. The GC includes a slice corresponding information storage unit that stores slice corresponding information in which an SRv6 slice, a plurality of IPv6 prefixes corresponding to the SRv6 slice, and a virtual network corresponding to the SRv6 slice are registered. The GC includes a slice specifying unit that specifies, based on the slice corresponding information, the SRv6 slice corresponding to a virtual network selected for a pod from a plurality of virtual networks. The GC includes a site specifying unit that specifies a MEC site for the virtual network. The GC includes a container control unit that causes a controller in the MEC site specified by the site specifying unit to cause a plurality of edge hosts included in the MEC site to activate a container corresponding to the pod deployed. The GC includes a setting unit that sets, to the controller in the MEC site specified by the site specifying unit, an object of an instance in the virtual network designated by a VRF (Virtual Routing and Forwarding) object. The MEC site specified by the site specifying unit may allocate an IP address for a VIP (Virtual IP) of the pod according to a predefined address allocation policy and accommodate it as a route of VRF set by the setting unit. The BGP speaker unit in the MEC site specified by the site specifying unit may advertise, to a peer, a VPN route for an IP address for the VIP, and receive a VPN route from the peer. The VPN route may be an IPv4 or IPv6 unicast route. The VPN route may be a VPNv4 or VPNv6 unicast route. The controller in the MEC site specified by the site specifying unit may set the virtual switch unit so as to allow transfer of a packet sent to / received from the pod deployed.

The controller may include an acquisition unit that acquires a prefix allocated to the MEC site by an operator, the allocation unit may allocate, to each of the plurality of edge hosts, a prefix from the prefix acquired by the acquisition unit, and the reporting unit may report, to the GC, a prefix allocated to each of the plurality of edge hosts. After an ingress gateway is generated, the site specifying unit may specify, based on an OriginPool attribute of the ingress gateway, the MEC site that needs to be set for the virtual network.

According to the present invention, a global controller that manages a plurality of MEC sites is provided. The global controller includes a corresponding information storage unit that stores slice corresponding information in which an SRv6 slice, a plurality of IPv6 prefixes corresponding to the SRv6 slice, and a virtual network corresponding to the SRv6 slice are registered. The global controller includes a slice specifying unit that specifies, based on the slice corresponding information, the SRv6 slice corresponding to a virtual network selected for a pod from a plurality of virtual networks. The global controller includes a site specifying unit that specifies a MEC site for the virtual network. The global controller includes a container control unit that causes a controller in the MEC site specified by the site specifying unit to cause a plurality of edge hosts included in the MEC site to activate a container corresponding to the pod deployed. The global controller includes a setting unit that sets to the controller in the MEC site specified by the site specifying unit an object of an instance in the virtual network designated by a VRF object wherein the object of the instance includes an attribute of an SRv6 locator from one of locator prefixes in the MEC site, and the locator prefixes are within a range of the plurality of IPv6 prefixes corresponding to the SRv6 slice corresponding to the virtual network. After an ingress gateway is generated, the site specifying unit may specify based on an OriginPool attribute of the ingress gateway the MEC site that needs to be set for the virtual network.

According to the present invention, a computer program comprising instructions which, when the program is executed by a computer, cause the computer to function as the global controller according to claim 1.
Fig. 1 schematically illustrates an example of a configuration of a communication system 10.
Fig. 2 schematically illustrates an example of a configuration of a MEC site 40.
Fig. 3 schematically illustrates an example of functional configurations of a controller 400 and a GC 100.
Fig. 4 schematically illustrates an example of a hardware configuration of a computer 1200 that functions as the GC 100, the controller 400, or an edge host 410.

Although a technique to identify a network slice in a mobile network is known, the technique has been exclusive to the mobile network. It is desirable to provide techniques that allow management of the network slices including IP networks and one of such techniques is the technique to manage the slices in a virtual network within the IP network. The communication system 10 according to the present embodiment provides a technique to manage slices in the virtual network.

Hereinafter, the present invention will be described through embodiments of the invention, but the following embodiments do not limit the invention according to claims. In addition, not all of the combinations of features described in the embodiments are essential to the solving means of the invention.

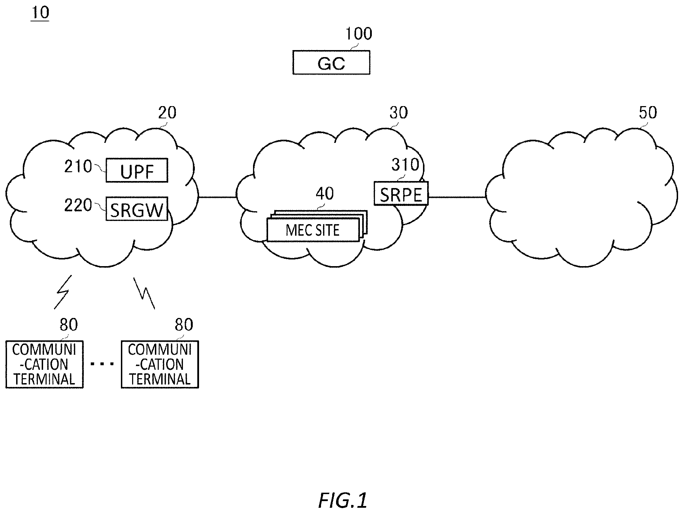

Fig. 1 schematically illustrates an example of a configuration of a communication system 10. The communication system 10 includes a MEC site 40 connected to a network 30 arranged between a network 20 and a network 50. The communication system 10 may include a plurality of MEC site 40.

The network 20 may be a mobile network. The network 20 may be compliant with the 5G communication system. The network 20 may be compliant with the 6G (6th Generation) and later communication systems.

The network 20 provides wireless communication services to a communication terminal 80. The communication terminal 80 accesses the network 20 via wireless base stations. For example, the communication terminal 80 accesses the network 20 via gNB (gNodeB). The communication terminal 80 may access the network 20 via WiFi (registered trademark) access points. The communication terminal 80 may be an access terminating device in a fixed network. For example, the communication terminal 80 may access the network 20 via W-AGF (Wireline Access Gateway Function) or the like. The communication terminal 80 may be an IoT (Internet of Things) terminal. The communication terminal 80 can include anything corresponding to IoE (Internet of Everything). Note that the communication terminal 80 may be a mobile phone such as a smartphone. The communication terminal 80 may be a tablet terminal. The communication terminal 80 may be a PC (Personal Computer). The communication terminal 80 may be a wearable terminal.

The network 30 may be a DN (Data Network). The network 30 may be an SRv6 network. An SRPE (Source Routing PE) 310, which is a PE (Provider Edge) router located on a boundary with the network 50, is arranged in the network 30. The communication system 10 may include SRPE 310.

The network 50 may be the Internet. The network 50 may be a cloud.

The communication system 10 may include the GC 100 that manages a plurality of MEC sites 40. The GC 100 may be arranged at any location. For example, the GC 100 is connected to the network 50. Also, for example the GC 100 is connected to the network 30. Also, for example the GC 100 is connected to the network 20.

Conventionally, communication between the communication terminal 80 and the MEC site 40 or the like has been performed through a UPF 210. In the communication system 10 according to the present embodiment, communication between the communication terminal 80 and the MEC site 40 or the like is performed through an SRGW (Segment Routing Gateway) 220, not through the UPF 210. The communication system 10 may include the SRGW 220.

The MEC site 40 includes a plurality of edge hosts. In the plurality of edge hosts, a container corresponding to a pod may be deployed, and each of the plurality of edge hosts may execute the container. Each of the plurality of edge hosts communicates with one or more communication terminals 80 through the network 30 and network 20. Said communication may be performed through the SRGW 220. A container in the edge hosts may collect information from one or more communication terminals 80 or may provide information to one or more communication terminals 80. For example, a communication device arranged in a store functions as an edge host, and a container in the edge host functions as a server application that collects information from communication terminals 80 such as sensors arranged in the store.

The communication system 10 may be implemented based on Volterra. The MEC site 40 may be a site on Volterra. The MEC site 40 may be one Kuvernetes cluster. The edge host may be a device on which VoltStack is implemented. The edge host may also be referred to as a worker node.

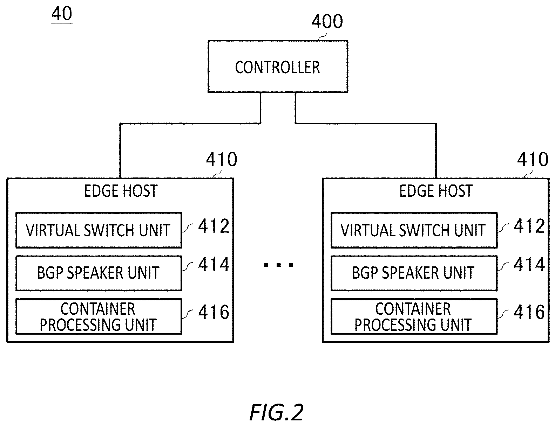

Fig. 2 schematically illustrates an example of a configuration of a MEC site 40. The MEC site 40 may include a controller 400 and a plurality of edge hosts 410. Note that one controller 400 may be arranged for a plurality of MEC sites 40. That is, the controller 400 may control a plurality of edge hosts 410 in one MEC site 40 or may control a plurality of edge hosts 410 in each of a plurality of MEC sites 40.

The edge host 410 may include a virtual switch unit 412, a BGP speaker unit 414, and a container processing unit 416. The virtual switch unit 412 may function as an SRPE in the network 30. The virtual switch unit 412 may be responsible for path control in the network 30, and the BGP speaker unit 414 may be responsible for path control in a virtual network built with a VPN (Virtual Private Network) in the network 30. The virtual switch unit 412 may perform BGP control on an underlay of the network 30, and BGP speaker unit 414 may perform BGP control on an overlay. BGP control on the overlays of the plurality of edge hosts may be collectively performed by the controller 400 alternatively. The container processing unit 416 executes a container to perform processing with containers.

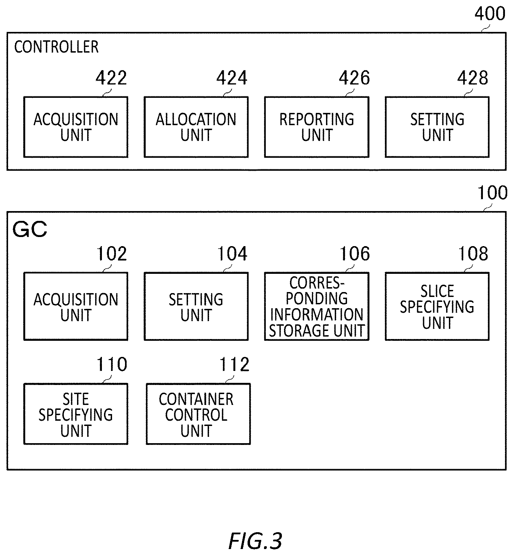

Fig. 3 schematically illustrates an example of functional configurations of a controller 400 and a GC 100. The controller 400 includes an acquisition unit 422, an allocation unit 424, a reporting unit 426, and a setting unit 428. The controller 400 may not necessarily include all of these units. The controller 400 may include only some of these units or may include configurations other than these.

The GC 100 includes an acquisition unit 102, a setting unit 104, a corresponding information storage unit 106, a slice specifying unit 108, a site specifying unit 110, and a container control unit 112. The GC 100 may not necessarily include all of these units. The GC 100 may include only some of these units or may include configurations other than these.

The acquisition unit 102 acquires various types of information. For example, the acquisition unit 102 acquires an IPv6 prefix to be allocated to the MEC site 40 by an operator. For example, the acquisition unit 102 receives an IPv6 prefix from a communication terminal used by the operator. For example, the acquisition unit 102 acquires /54 prefix.

The setting unit 104 performs various settings. For example, the setting unit 104 allocates an IPv6 prefix acquired by the acquisition unit 102 to the MEC site 40.

The acquisition unit 422 acquires various types of information. For example, acquisition unit 422 acquires an IPv6 prefix allocated by the setting unit 104.

The allocation unit 424 allocates, to each of the plurality of edge hosts 410, a prefix from the IPv6 prefix that is allocated by the GC 100 and acquired by the acquisition unit 422. For example, the allocation unit 424 allocates, to each of the plurality of edge hosts 410, a /64 prefix from the /54 prefix that is acquired by the acquisition unit 422. Each of the plurality of edge hosts 410 advertises, to the network 30, the allocated prefix.

The reporting unit 426 reports, to the GC 100, the allocation result by the allocation unit 424. The reporting unit 426 reports, to the GC 100, the IPv6 prefix allocated to each of the plurality of edge hosts 410 as the allocation result by the allocation unit 424. For example, the reporting unit 426 reports, to the GC 100, the /64 prefix allocated to each of the plurality of edge hosts 410.

The acquisition unit 102 may acquire the SRv6 slice that the operator has defined by the plurality of IPv6 prefixes, and the virtual network of the system namespace. The operator may define the SRv6 slice by a plurality of IPv6 prefixes selected from the prefixes allocated to the MEC site 40. For example, the operator selects a plurality of IPv6 prefixes from the /54 prefixes allocated to the MEC site 40.

The corresponding information storage unit 106 stores slice corresponding information in which an SRv6 slice, a plurality of IPv6 prefixes corresponding to the SRv6 slice, and a virtual network corresponding to the SRv6 slice are registered. The slice corresponding information includes, for each of a plurality of SRv6 slices, a plurality of corresponding IPv6 prefixes and a corresponding virtual network. By allocating, to the edge host 410, the IPv6 prefix corresponding to the SRv6 slice, it is possible to make an association among the SRv6 slice, the edge host 410, and the virtual network.

The slice specifying unit 108 specifies, based on the slice corresponding information stored in the corresponding information storage unit 106, an SRv6 slice corresponding to the virtual network that is selected for a pod from a plurality of virtual network. For example, the virtual network for a pod is selected from a plurality of virtual networks by a customer of the operator. Specifically, the customer of the operator selects the virtual network suitable for a pod when generating an ingress gateway for the pod to be deployed in the namespace of vk8s (Virtual Kubernetes).

The site specifying unit 110 specifies a MEC site 40 for the selected virtual network. For example, after the ingress gateway is generated, the site specifying unit 110 specifies, based on an OriginPool attribute of the ingress gateway, the MEC site 40 that needs to be set up for the selected virtual network.

The container control unit 112 causes the controller 400 in the MEC site 40 specified by the site specifying unit 110 to cause the plurality of edge hosts 410 included in the MEC site 40 to activate the container corresponding to the pod deployed.

The setting unit 104 sets, to the controller 400 in the MEC site 40 specified by the site specifying unit 110, an object of an instance in the virtual network designated by a VRF object. Said object includes an attribute of an SRv6 locator from one of the locator prefixes in said MEC site 40. Said locator prefixes are within the range of the plurality of IPv6 prefixes corresponding to the SRv6 slice corresponding to said virtual network.

The controller 400 in the MEC site 40 may instantiate the VRF instance for the VRF object associated with the SID of the SRv6 from the set SRv6 locator. The MEC site 40 may allocate an IP address for the VIP (Virtual IP) of the pod according to the predefined address allocation policy and accommodate it as a route of VRF set by the setting unit 104.

The BGP speaker unit 414 in the MEC site 40 may advertise, to a peer, the VPN route (IPv4, IPv6, VPNv4, or VPNv6 unicast route) for an IP address for the VIP. An export route target attribute value for said route advertised is defined according to the specification of the SRv6 of the virtual network. The peer may be the BGP speaker unit 414 included in each of the plurality of MEC sites 40. Also, the peer may be the SRPE 310. Also, the peer may be a route reflector (RR). Also, the peer may be a BGP-EPE (Egress Peering Engineering) controller XXX. Also, the peer may be a N4BGP controller YYY

The BGP speaker unit 414 may receive the VPN route from the peer. The VPN route that the BGP speaker unit 414 imports to VRF follows the connection policy of the slice. An import route target attribute value corresponding to the connection policy is extracted from the specification of the SRv6 of the virtual network. The VPN route received from the peer may include a Prefix-SID attribute. When the peer is an N4BGP controller YYY, the SID included in the Prefix-SID attribute of the VPN route may indicate GTP4.E or GTP6.E in the SRGW 220. In the case of GTP6.E, the VPN route may include an IP address of the wireless base station that accommodates the communication terminal 80. The wireless base station IP address may be included in the next-hop field in the MP-NLRI attribute of the VPN route. The wireless base station IP address may be included in the Tunnel-Encap attribute of the VPN route. The wireless base station IP address may be included in the NLRI of the VPN route. The SRv6 locator unit of the SID may be different for each corresponding slice. When the peer is the BGP-EPE controller XXX, the SID included in the Prefix-SID attribute of the VPN route may be a SID for Egress Peer Engineering that identifies a peer connected to the plurality of networks 50 in the SRPE 310. The SID for Egress Peer Engineering of the VPN route may be different for each corresponding slice. SRv6 locator unit of the SID for Egress Peer Engineering may be different for each corresponding slice.

The controller 400 in the MEC site 40 sets a virtual switch unit 412 so as to allow transfer of a packet sent to / received from the pod deployed. The transfer rule in the virtual switch unit 412 follows the instantiated VRF and the route in said VRF. The transfer rule may be based on destination IP addresses. The transfer rule may be based on more detailed flows provided by combinations of 5 tuples (a destination/source IP address, a destination/source port number, a ToS value) or the like.

The virtual switch unit 412 encapsulates, with an IPv6 header, the packet from the pod that has been enabled to communicate with the outside by NAT. According to the SR-Policy of the received VPN route, said IPv6 header may include the value of the Prefix-SID set in the SID list of the destination address or the SRH (SR Header), and said IPv6 header may include the IP address of the virtual switch unit 412 set in the source address. The virtual switch unit 412 sends the encapsulated packet to the network 30. When the destination of the packet from the pod is the communication terminal 80, the encapsulated packet is transferred to the SRGW 220 on the slice corresponding to the SRv6 locator of the SID. In the case of GTP6.E, the final SID of the SRH (SR Header) may set the IP address of the wireless base station that accommodates the communication terminal 80. When the destination of the packet from the pod is the terminals or applications on the network 50, the encapsulated packet is transferred to the SRPE 310 on the slice corresponding to the SRv6 locator of the SID. SRPE 310 may transfer the packet to a connecting peer of the network 50 corresponding to the SID.

The virtual switch unit 412 receives the packet from the network 30 and refers to the destination address of the external IPv6 header. If the packet matches a path that has the SID of SRv6 of VRF as the destination address of the external IPv6 header, the virtual switch unit 412 decapsulates the received packet and refers to the internal IP header of the VRF context. The SRv6 SID of said VRF may be End.DT4 Behavior. The SRv6 SID of said VRF may be End.DT6 Behavior. The SRv6 SID of said VRF may be End.DT46 Behavior. The SRv6 SID of said VRF may be End.DX4 Behavior. The SRv6 SID of said VRF may be End.DX6 Behavior. If the transfer rule for the destination exists, the virtual switch unit 412 transfers the internal packet to the destination. Otherwise, the virtual switch unit 412 drops the packet.

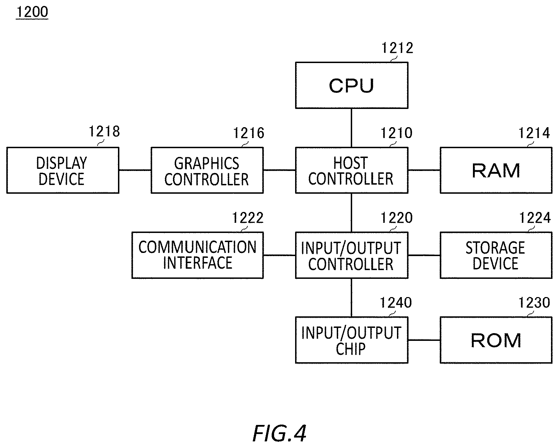

Fig. 4 schematically illustrates an example of a hardware configuration of a computer 1200 that functions as the GC 100, the controller 400, or an edge host 410. A program installed in the computer 1200 can cause the computer 1200 to function as one or more "units" of an apparatus according to the present embodiment, or cause the computer 1200 to perform operations associated with the apparatus or perform one or more "units" thereof according to the present embodiment, and/or cause the computer 1200 to perform the process according to the present embodiment or perform the steps of the process. Such a program may be executed by a CPU 1212 to cause the computer 1200 to perform particular operations associated with some or all of the blocks in the flowcharts and block diagrams described in the specification.

The computer 1200 according to the present embodiment includes the CPU 1212, a RAM 1214, and a graphics controller 1216, which are connected to each other via a host controller 1210. The computer 1200 also includes input/output units such as a communication interface 1222, a storage device 1224, a DVD drive and an IC card drive, which are connected to the host controller 1210 via an input/output controller 1220. The DVD drive may be a DVD-ROM drive, a DVD-RAM drive, etc. The storage device 1224 may be a hard disk drive, a solid-state drive, and the like. The computer 1200 also includes a ROM 1230 and a legacy input/output unit such as a keyboard, which are connected to the input/output controller 1220 via an input/output chip 1240.

The CPU 1212 operates according to the programs stored in the ROM 1230 and the RAM 1214, thereby controlling each unit. The graphics controller 1216 acquires image data which is generated by the CPU 1212 in a frame buffer or the like provided in the RAM 1214 or in itself so as to cause the image data to be displayed on a display device 1218.

The communication interface 1222 communicates with other electronic devices via a network. The storage device 1224 stores a program and data used by the CPU 1212 in the computer 1200. The DVD drive reads the programs or the data from the DVD-ROM or the like, and provides the storage device 1224 with the programs or the data. The IC card drive reads the program and data from an IC card, and/or writes the program and data to the IC card.

The ROM 1230 stores therein a boot program or the like executed by the computer 1200 at the time of activation, and/or a program depending on the hardware of the computer 1200. The input/output chip 1240 may also connect various input/output units via a USB port, a parallel port, a serial port, a keyboard port, a mouse port, or the like to the input/output controller 1220.

A program is provided by a computer-readable storage medium such as the DVD-ROM or the IC card. The program is read from the computer-readable storage medium, installed into the storage device 1224, RAM 1214, or ROM 1230, which are also examples of a computer-readable storage medium, and executed by the CPU 1212. Information processing written in these programs is read by the computer 1200, and provides cooperation between the programs and the various types of hardware resources described above. A device or method may be constituted by realizing the operation or processing of information in accordance with the usage of the computer 1200.

For example, in a case where a communication is performed between the computer 1200 and an external device, the CPU 1212 may execute a communication program loaded in the RAM 1214 and instruct the communication interface 1222 to perform communication processing based on a process written in the communication program. The communication interface 1222, under control of the CPU 1212, reads transmission data stored on a transmission buffer region provided in a recording medium such as the RAM 1214, the storage device 1224, the DVD-ROM, or the IC card, and transmits the read transmission data to a network or writes reception data received from a network to a reception buffer region or the like provided on the recording medium.

In addition, the CPU 1212 may cause all or a necessary portion of a file or a database to be read into the RAM 1214, the file or the database having been stored in an external recording medium such as the storage device 1224, the DVD drive (DVD-ROM), the IC card, etc., and perform various types of processing on the data on the RAM 1214. Then, the CPU 1212 may write the processed data back in the external recording medium.

Various types of information, such as various types of programs, data, tables, and databases, may be stored in the recording medium to undergo information processing. The CPU 1212 may execute, on the data read from the RAM 1214, various types of processing including various types of operations, information processing, conditional judgement, conditional branching, unconditional branching, information retrieval/replacement, or the like described throughout the present disclosure and specified by instruction sequences of the programs, to write the results back to the RAM 1214. In addition, the CPU 1212 may retrieve information in a file, a database, or the like in the recording medium. For example, when a plurality of entries, each having an attribute value of a first attribute associated with an attribute value of a second attribute, are stored in the recording medium, the CPU 1212 may search for an entry whose attribute value of the first attribute matches a designated condition, from among the plurality of entries, and read the attribute value of the second attribute stored in the entry, thereby acquiring the attribute value of the second attribute associated with the first attribute satisfying a predetermined condition.

The above described program or software modules may be stored in the computer-readable storage medium on or near the computer 1200. In addition, a recording medium such as a hard disk or a RAM provided in a server system connected to a dedicated communication network or the Internet can be used as the computer-readable storage medium, thereby providing the program to the computer 1200 via the network.

Blocks in flowcharts and block diagrams in the present embodiments may represent steps of processes in which operations are performed or "units" of devices responsible for performing operations. A specific step and "unit" may be implemented by dedicated circuitry, programmable circuitry supplied along with a computer-readable instruction stored on a computer-readable storage medium, and/or a processor supplied along with the computer-readable instruction stored on the computer-readable storage medium. The dedicated circuitry may include a digital and/or analog hardware circuit, or may include an integrated circuit (IC) and/or a discrete circuit. The programmable circuitry may include, for example, a reconfigurable hardware circuit including logical AND, logical OR, logical XOR, logical NAND, logical NOR, and other logical operations, and a flip-flop, a register, and a memory element, such as a field-programmable gate array (FPGA) and a programmable logic array (PLA).

The computer-readable storage medium may include any tangible device capable of storing an instruction performed by an appropriate device, so that the computer-readable storage medium having the instruction stored thereon constitutes a product including an instruction that may be performed in order to provide means for performing an operation specified by a flowchart or a block diagram. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disk read only memory (CD-ROM), a digital versatile disk (DVD), a Blu-ray (registered trademark) disk, a memory stick, an integrated circuit card, or the like.

The computer-readable instructions may include an assembler instruction, an instruction-set-architecture (ISA) instruction, a machine instruction, a machine dependent instruction, a microcode, a firmware instruction, state-setting data, or either of source code or object code written in any combination of one or more programming languages including an object oriented programming language such as Smalltalk (registered trademark), JAVA (registered trademark), and C++, and a conventional procedural programming language such as a "C" programming language or a similar programming language.

The computer-readable instruction may be provided to a general-purpose computer, a special purpose computer, or a processor or programmable circuitry of other programmable data processing apparatus locally or via a local area network (LAN), a wide area network (WAN) such as the Internet or the like in order that the general-purpose computer, the special purpose computer, or the processor or the programmable circuitry of the other programmable data processing apparatus performs the computer-readable instruction to provide means for performing operations specified by the flowchart or the block diagram. Examples of the processor include a computer processor, a processing unit, a microprocessor, a digital signal processor, a controller, a microcontroller, and the like.

While the present invention has been described by way of the embodiments, the technical scope of the present invention is not limited to the scope described in the above-described embodiments. It is apparent to persons skilled in the art that various alterations or improvements can be added to the above-described embodiments. It is also apparent from the scope of the claims that the embodiments added with such alterations or improvements can be included in the technical scope of the invention.

The operations, procedures, steps, and stages or the like of each process performed by an apparatus, system, program, and method shown in the claims, specifications, or diagrams can be implemented in any order as long as the order is not indicated by "prior to," "before," or the like and as long as the output from a previous process is not used in a later process. Even if the process flow is described using phrases such as "first" or "next" in the claims, specifications, and diagrams, it does not necessarily mean that the process must be performed in this order.

10 system, 20 network, 30 network, 40 MEC site, 50 network, 80 communication terminal, 100 GC, 102 acquisition unit, 104 setting unit, 106 corresponding information storage unit, 108 slice specifying unit, 110 site specifying unit, 112 container control unit, 210 UPF, 220 SRGW, 310 SRPE, 400 controller, 410 edge host, 412 virtual switch unit, 414 BGP speaker unit, 416 container processing unit, 422 acquisition unit, 424 allocation unit, 426 reporting unit, 428 setting unit, 1200 computer, 1210 host controller, 1212 CPU, 1214 RAM, 1216 graphics controller, 1218 display device, 1220 input/output controller, 1222 communication interface, 1224 storage device, 1230 ROM, 1240 input/output chip.

## Claims

1. A global controller (100) configured to manage a plurality of Mobile Edge Computing, MEC, sites (40), comprising:
a corresponding information storage unit (106) configured to store slice corresponding information in which a Segment Routing IPv6, SRv6 slice, a plurality of IPv6 prefixes corresponding to the SRv6 slice, and a virtual network corresponding to the SRv6 slice are registered;
a slice specifying unit (108) configured to specify, based on the slice corresponding information the SRv6 slice corresponding to a virtual network selected for a pod from a plurality of virtual networks;
a site specifying unit (110) configured to specify a MEC site (40) for the virtual network;
a container control unit (112) configured to cause a controller in the MEC site (40) specified by the site specifying unit (110) to cause a plurality of edge hosts (410) included in the MEC site (40) to activate a container corresponding to the pod deployed; and
a setting unit (104) configured to set, to the controller in the MEC site (40) specified by the site specifying unit (110), an object of an instance in the virtual network designated by a Virtual Routing and Forwarding, VRF object, wherein
the object of the instance includes an attribute of an SRv6 locator from one of locator prefixes in the MEC site (40), and
the locator prefixes are within a range of the plurality of IPv6 prefixes corresponding to the SRv6 slice corresponding to the virtual network.

2. The global controller (100) according to claim 1, wherein
after a customer selects the virtual network suitable for a pod when generating an ingress gateway for the pod to be deployed, the site specifying unit (110) is configured to specify, based on an OriginPool attribute of the ingress gateway, the MEC site (40) that needs to be set for the virtual network.

3. A computer program comprising instructions which, when the program is executed by a computer, cause the computer to function as the global controller (100) according to claim 1 or 2.

4. A communication system comprising:
a MEC site (40) that is connected to an SRv6 network arranged between a mobile network and Internet and that has a controller (400) and a plurality of edge hosts (410); and
the Global Controller, GC, (100) according to claim 1,
wherein the controller (400) includes:
an allocation unit (424) configured to allocate a prefix to each of the plurality of edge hosts (410) from an IPv6 prefix allocated by the GC; and
a reporting unit (426) configured to report to the GC an allocation result by the allocation unit (424),
wherein each of the plurality of edge hosts (410) includes:
a virtual switch unit (412) configured to advertise to the SRv6 network a prefix allocated by the allocation unit (424); and
a Border Gateway Protocol, BGP, speaker unit (414).

5. The communication system according to claim 4, wherein
the MEC site (40) specified by the site specifying unit (110) is configured to allocate an IP address for a Virtual IP, VIP, of the pod according to a predefined address allocation policy and accommodates it as a route of VRF set by the setting unit (104).

6. The communication system according to claim 5, wherein
the BGP speaker unit (414) in the MEC site (40) specified by the site specifying unit (110) is configured to advertise, to a peer, a VPN route for an IP address for the VIP, and configured to receive Virtual Private Network, VPN route from the peer.

7. The communication system according to claim 6, wherein
the controller (400) in the MEC site (40) specified by the site specifying unit (110) is configured to set the virtual switch unit (412) so as to allow transfer of a packet sent to / received from the pod deployed.

8. The communication system according to any one of claims 4 to 7, wherein
the controller (400) includes an acquisition unit (422) configured to acquire a prefix allocated to the MEC site (40) by an operator,
the allocation unit (424) is configured to allocate, to each of the plurality of edge hosts (410), a prefix from the prefix acquired by the acquisition unit (422), and
the reporting unit (426) is configured to report, to the GC, a prefix allocated to each of the plurality of edge hosts (410).

9. The communication system according to any one of claims 4 to 8, wherein
after a customer selects the virtual network suitable for a pod when generating an ingress gateway for the pod to be deployed, the site specifying unit (110) is configured to specify, based on an OriginPool attribute of the ingress gateway, the MEC site (40) that needs to be set for the virtual network.

10. The global controller (100) according to claim 1, wherein the site specifying unit (110) is configured to specify the MEC site (40) that needs to be set for the virtual network selected for the pod.

## Patentansprüche

1. Globale Steuereinheit (100), die dafür konfiguriert ist, eine Vielzahl von MEC-, Mobile Edge Computing, Standorten (40) zu managen, aufweisend:
eine entsprechende Informationsspeichereinheit (106), die dafür konfiguriert ist, Slice-spezifische Information zu speichern, in der ein Segment-Routing-IPv6-, SRv6, Slice, mehrere dem SRv6-Slice entsprechende IPv6-Präfixe und ein dem SRv6-Slice entsprechendes virtuelles Netzwerk registriert sind;
eine Slice-Spezifizierungseinheit (108), die dafür konfiguriert ist, den SRv6-Slice, der einem virtuellen Netzwerk entspricht, das für einen Pod aus einer Vielzahl von virtuellen Netzwerken ausgewählt wurde, basierend auf der Slice-spezifischen Information zu spezifizieren;
eine Standortspezifizierungseinheit (110), die dafür konfiguriert ist, einen MEC-Standort (40) für das virtuelle Netzwerk zu spezifizieren;
eine Container-Steuereinheit (112), die dafür konfiguriert ist, eine Steuereinheit in dem durch die Standortspezifizierungseinheit (110) spezifizierten MEC-Standort (40) zu veranlassen, eine Vielzahl von im MEC-Standort (40) enthaltenen Edge-Hosts (410) zu veranlassen, einen dem bereitgestellten Pod entsprechenden Container zu aktivieren; und
eine Setzeinheit (104), die dafür konfiguriert ist, für die Steuereinheit in dem durch die Standortspezifizierungseinheit (110) spezifizierten MEC-Standort (40) ein Objekt einer Instanz in dem durch ein VRF-, Virtual Routing and Forwarding, Objekt spezifizierten virtuellen Netzwerk zu setzen,
wobei das Objekt der Instanz ein Attribut eines SRv6-Locators von einem der Locator-Präfixe im MEC-Standort (40) enthält, und
die Locator-Präfixe innerhalb eines Bereichs der Vielzahl von IPv6-Präfixe liegen, die dem dem virtuellen Netzwerk entsprechenden SRv6-Slice entsprechen.

2. Globale Steuereinheit (100) nach Anspruch 1, wobei
nachdem ein Kunde beim Erzeugen eines Ingress-Gateways für den bereitzustellend Pod das für den Pod geeignete virtuelle Netzwerk ausgewählt hat, die Standortspezifizierungseinheit (110) dafür konfiguriert ist, basierend auf einem OriginPool-Attribut des Ingress-Gateways den MEC-Standort (40) zu spezifizieren, der für das virtuelle Netzwerk festgelegt werden muss.

3. Computerprogramm, das Anweisungen enthält, die, wenn das Programm durch einen Computer ausgeführt wird, den Computer veranlassen, als globale Steuereinheit (100) nach Anspruch 1 oder 2 zu funktionieren.

4. Kommunikationssystem, aufweisend:
einen MEC-Standort (40), der mit einem SRv6-Netzwerk verbunden ist, das zwischen einem Mobilfunknetz und dem Internet angeordnet ist, und der eine Steuereinheit (400) und eine Vielzahl von Edge-Hosts (410) aufweist; und
die globale Steuereinheit, GC, (100) nach Anspruch 1,
wobei die Steuereinheit (400) aufweist:
eine Zuweisungseinheit (424), die dafür konfiguriert ist, jedem der Vielzahl von Edge-Hosts (410) ein Präfix aus einem durch die GC zugewiesenen IPv6-Präfix zuzuweisen; und
eine Meldeeinheit (426), die dafür konfiguriert ist, der GC ein durch die Zuweisungseinheit (424) erhaltenes Zuweisungsergebnis zu melden,
wobei jeder der Vielzahl von Edge-Hosts (410) aufweist:
eine virtuelle Switch-Einheit (412), die dafür konfiguriert ist, dem SRv6-Netzwerk ein durch die Zuweisungseinheit (424) zugewiesenes Präfix bekanntzugeben; und
eine BGP-, Border Gateway Protocol, Speaker-Einheit (414).

5. Kommunikationssystem nach Anspruch 4, wobei
der durch die Standortspezifizierungseinheit (110) spezifizierte MEC-Standort (40) dafür konfiguriert ist, eine IP-Adresse für eine virtuelle IP, VIP, des Pods gemäß einer vordefinierten Adresszuweisungsregel zuzuweisen und diese als eine durch die Setzeinheit (104) festgelegte VRF-Route aufzunehmen.

6. Kommunikationssystem nach Anspruch 5, wobei
die BGP-Speaker-Einheit (414) in dem durch die Standortspezifizierungseinheit (110) spezifizierten MEC-Standort (40) dafür konfiguriert ist, einem Peer eine VPN-Route für eine IP-Adresse für das VIP bekanntzugeben, und dafür konfiguriert ist, eine VPN-, Virtual Private Network, Route vom Peer zu empfangen.

7. Kommunikationssystem nach Anspruch 6, wobei
die Steuereinheit (400) in dem durch die Standortspezifizierungseinheit (110) spezifizierten MEC-Standort (40) dafür konfiguriert ist, die virtuelle Switch-Einheit (412) so einzustellen, dass eine Übertragung eines an den verwendeten Pod übertragenen/von diesem empfangenen Pakets ermöglicht wird.

8. Kommunikationssystem nach einem der Ansprüche 4 bis 7, wobei
die Steuereinheit (400) eine Erfassungseinheit (422) aufweist, die dafür konfiguriert ist, ein Präfix zu erfassen, das dem MEC-Standort (40) durch eine Bedienungsperson zugewiesen wurde,
die Zuweisungseinheit (424) dafür konfiguriert ist, jedem der Vielzahl von Edge-Hosts (410) ein Präfix von den durch die Erfassungseinheit (422) erfassten Präfixen zuzuweisen, und
die Meldeeinheit (426) dafür konfiguriert ist, der GC ein Präfix zu melden, das jedem der Vielzahl von Edge-Hosts (410) zugewiesen wurde.

9. Kommunikationssystem nach einem der Ansprüche 4 bis 8, wobei
nachdem ein Kunde beim Erzeugen eines Ingress-Gateways für einen bereitzustellenden Pod das für den Pod geeignete virtuelle Netzwerk ausgewählt hat, die Standortspezifizierungseinheit (110) dafür konfiguriert ist, basierend auf einem OriginPool-Attribut des Ingress-Gateways den MEC-Standort (40) zu spezifizieren, der für das virtuelle Netzwerk festgelegt werden muss.

10. Globale Steuereinheit (100) nach Anspruch 1, wobei die Standortspezifizierungseinheit (110) dafür konfiguriert ist, den MEC-Standort (40) zu spezifizieren, der für das für den Pod ausgewählte virtuelle Netzwerk festgelegt werden muss.

## Revendications

1. Dispositif de commande global (100) configuré pour gérer une pluralité de sites MEC, ou Mobile Edge Computing (40), comprenant :
une unité de stockage d'informations (106) correspondante configurée pour stocker des informations correspondant à une tranche dans laquelle une tranche de routage de segment IPv6, ou SRv6, une pluralité de préfixes IPv6 correspondant à la tranche SRv6 et un réseau virtuel correspondant à la tranche SRv6 sont enregistrés ;
une unité spécifiant une tranche (108) configurée pour spécifier, en se basant sur les informations correspondant à la tranche, la tranche SRv6 correspondant à un réseau virtuel choisi pour un pod parmi une pluralité de réseaux virtuels ;
une unité de spécification de site (110) configurée pour spécifier un site MEC (40) pour le réseau virtuel ;
une unité de commande de contenant (112) configurée pour amener un dispositif de commande dans le site MEC (40) spécifié par l'unité de spécification de site (110) à amener une pluralité d'hôtes Edge (410) inclus dans le site MEC (40) à activer un contenant correspondant au pod déployé ; et
une unité de définition (104) configurée pour définir, auprès du dispositif de commande dans le site MEC (40) spécifié par l'unité de spécification de site (110), un objet d'une instance dans le réseau virtuel désigné par un objet VRF, ou Virtual Routing and Forwarding, dans lequel
l'objet de l'instance inclut un attribut d'un localisateur SRv6 parmi l'un des préfixes de localisateur dans le site MEC (40), et
les préfixes de localisateur se situent dans une plage de la pluralité de préfixes IPv6 correspondant à la tranche SRv6 correspondant au réseau virtuel.

2. Dispositif de commande global (100) selon la revendication 1, dans lequel
après qu'un client sélectionne le réseau virtuel adapté à un pod lors de la génération d'une passerelle d'entrée pour le pod à déployer, l'unité de spécification de site (110) est configurée pour spécifier, en se basant sur un attribut OriginPool de la passerelle d'entrée, le site MEC (40) qui doit être défini pour le réseau virtuel.

3. Programme informatique comprenant des instructions, qui, lorsque le programme est exécuté par un ordinateur, amènent l'ordinateur à fonctionner en tant que le dispositif de commande global (100) selon la revendication 1 ou 2.

4. Système de communication comprenant :
un site MEC (40) qui est connecté à un réseau SRv6 agencé entre un réseau mobile et Internet et qui a un dispositif de commande (400) et une pluralité d'hôtes Edge (410) ; et
le dispositif de commande global, ou GC, (100) selon la revendication 1, dans lequel le dispositif de commande (400) inclut :
une unité d'attribution (424) configurée pour attribuer un préfixe à chacun de la pluralité d'hôtes Edge (410) parmi un préfixe IPv6 attribué par le GC ; et
une unité de rapport (426) configurée pour rapporter au GC un résultat d'attribution par l'unité d'attribution (424),
dans lequel chacun de la pluralité d'hôtes Edge (410) inclut :
une unité de commutation virtuelle (412) configurée pour annoncer au réseau SRv6 un préfixe attribué par l'unité d'attribution (424) ; et
une unité de haut-parleur de Border Gateway Protocol, ou BGP (414).

5. Système de communication selon la revendication 4, dans lequel
le site MEC (40) spécifié par l'unité de spécification de site (110) est configuré pour attribuer une adresse IP pour une IP virtuelle, ou VIP, du pod conformément à une politique d'attribution d'adresse prédéfinie et l'héberge en tant que chemin de VRF défini par l'unité de définition (104).

6. Système de communication selon la revendication 5, dans lequel
l'unité de haut-parleur BGP (414) dans le site MEC (40) spécifié par l'unité de spécification de site (110) est configurée pour annoncer, à un pair, un chemin VPN pour une adresse IP pour le VIP, et configurée pour recevoir un réseau privé virtuel, ou VPN, de la part du pair.

7. Système de communication selon la revendication 6, dans lequel
le dispositif de commande (400) dans le site MEC (40) spécifié par l'unité de spécification de site (110) est configuré pour définir l'unité de commutation virtuelle (412) afin qu'elle permette le transfert d'un paquet envoyé à partir du/reçu depuis le pod déployé.

8. Système de communication selon l'une quelconque des revendications 4 à 7, dans lequel
le dispositif de commande (400) inclut une unité d'acquisition (422) configurée pour acquérir un préfixe attribué au site MEC (40) par un opérateur,
l'unité d'attribution (424) est configurée pour attribuer, à chacun de la pluralité d'hôtes Edge (410), un préfixe à partir du préfixe acquis par l'unité d'acquisition (422), et
l'unité de rapport (426) est configurée pour rapporter, au GC, un préfixe attribué à chacun de la pluralité d'hôtes Edge (410).

9. Système de communication selon l'une quelconque des revendications 4 à 8, dans lequel
après qu'un client sélectionne le réseau virtuel adapté à un pod lors de la génération d'une passerelle d'entrée pour le pod à déployer, l'unité de spécification de site (110) est configurée pour spécifier, en se basant sur un attribut OriginPool de la passerelle d'entrée, le site MEC (40) qui doit être défini pour le réseau virtuel.

10. Dispositif de commande global (100) selon la revendication 1, dans lequel l'unité de spécification de site (110) est configurée pour spécifier le site MEC (40) qui doit être défini pour le réseau virtuel sélectionné pour le pod.
